# FASCICULE DE BREVET EUROPEEN

(11) **EP 1 974 132 B1**
(45) Date de publication et mention de la délivrance du brevet: **05.01.2011**
(21) Numéro de dépôt: 07718095.8
(22) Date de dépôt: 12.01.2007
(51) Int. Cl.: F01N 3/20, F01N 3/025

(54) **SYSTEME D'INTRODUCTION DE GAZ DANS UNE LIGNE D'ECHAPPEMENT D'UN MOTEUR DE VEHICULE AUTOMOBILE**
SYSTEM ZUR EINFÜHRUNG VON GAS IN DIE MOTORABGASLEITUNG EINES KRAFTFAHRZEUGS
SYSTEM FOR INTRODUCING GAS INTO A MOTOR VEHICLE ENGINE EXHAUST LINE

(30) Priorité: 20.01.2006 FR 0600549
(43) Date de publication de la demande: 01.10.2008
(73) Titulaire: PEUGEOT CITROËN AUTOMOBILES S.A., 78140 Vélizy Villacoublay (FR)
(72) Inventeur: TRONEL, Frédéric, F-92600 Asnieres Sur Seine (FR); PERRARD, William, F-78770 Andelu (FR)
(74) Mandataire: Ménès, Catherine
(86) Numéro de dépôt international: PCT/FR2007/050646
(87) Numéro de publication internationale: WO 2007/083058

(56) Documents cités:
- WO-A-2005/073527
- DE-A1- 19 914 787
- JP-A- 2006 307 734
- JP-A- 2008 128 046
- JP-U- 57 200 612
- JP-U- 57 200 612
- US-A- 5 435 976
- US-A1- 2003 200 742
- US-B1- 6 361 754
- PATENT ABSTRACTS OF JAPAN vol. 2002, no. 12, 12 décembre 2002 (2002-12-12) & JP 2002 221024 A (KAWASAKI HEAVY IND LTD; SHIP & OCEAN FOUNDATION), 9 août 2002 (2002-08-09)

## Description

La présente invention concerne un système d'introduction de gaz dans une ligne d'échappement d'un moteur de véhicule automobile, équipée de moyens de dépollution.

Les polluants issus de la combustion d'un moteur Diesel ou essence d'un véhicule automobile sont majoritairement des hydrocarbures imbrûlés, des oxydes d'azote (monoxyde d'azote NO et dioxyde d'azote N02), des oxydes de carbone (monoxyde de carbone CO) et dans le cas des moteurs Diesel et des moteurs à injection directe essence, des particules.

Afin de respecter les normes environnementales internationales, la maîtrise des émissions de HC, de CO, de NOx et de particules est impérative et des technologies de post-traitement sont indispensables.

Les systèmes de post-traitement Diesel sont constitués actuellement d'un catalyseur d'oxydation et dans un certain nombre de cas, d'un filtre à particules.

Pour les moteurs essence, le post-traitement est basé sur des catalyseurs trois voies, permettant de traiter CO, HC et NOx simultanément lorsque le moteur fonctionne à la stoechiométrie (richesse = 1). Enfin, les technologies de piège à NOx et de DeNOx par SCR (sélective catalytic reduction) à partir de NH3 et d'hydrocarbures, sont connues pour le traitement des NOx en mélange pauvre. Le filtre à particules et le piège à NOx sont des technologies basées sur le principe du stockage et de l'élimination lors d'une régénération.

Dans le premier cas, cette régénération se fait par augmentation de la température des gaz d'échappement et dans le second cas, par modification de la richesse des gaz d'échappement jusqu'à dépasser la richesse stoechiométrique.

Pour les différentes applications de post-traitement, l'intérêt d'introduire des gaz supplémentaires dans la ligne d'échappement a été démontré. C'est le cas en Diesel pour la SCR où le gaz introduit concerné peut être de l'ammoniac NH3 ou des hydrocarbures. Pour la régénération d'un filtre à particules, l'introduction d'hydrocarbures peut permettre de générer de la chaleur au niveau du catalyseur afin de brûler les particules stockées dans ce filtre à particules. Pour le piège à NOx, tant en Diesel qu'en essence, l'introduction d'hydrocarbures, d'H2 ou de CO permet de purger le piège et de convertir les NOx stockés.

On connait de la demande de brevet US20030200742 une ligne d'échappement avec un filtre à particules dont la régénération est promue par l'injection d'hydrogène, obtenu par conversion de fuel dans un plasmatron, cet hydrogène étant injecté en amont d'un ensemble constitué par un catalyseur et un filtre à particules.

On connait de plus de JP57200612U une ligne d'échappement d'un moteur équipé d'un turbocompresseur, la ligne d'échappement comportant un filtre à particules et, juste en aval de la turbine, une jonction avec une conduite latérale dans laquelle on injecte de l'air et du carburant.

Cependant, l'une des contraintes d'introduction des gaz à l'échappement est la nécessité d'obtenir un mélange homogène entre les gaz introduits et les gaz d'échappement. Un mauvais mélange peut être à l'origine par exemple de l'incapacité du catalyseur à convertir les gaz introduits ou de points chauds sur ce catalyseur. Le rendement global du système est alors de toute façon abaissé.

Le but de l'invention est donc de résoudre ces problèmes. A cet effet, l'invention a pour objet un système d'introduction de gaz dans une ligne d'échappement d'un moteur de véhicule automobile, équipée d'un ensemble formé par un catalyseur capable de générer un exotherme et un filtre à particules, le moteur étant associé à un turbocompresseur, caractérisé en ce qu'il comporte des moyens d'introduction d'hydrocarbures à l'état gazeux, placés en sortie du turbocompresseur et dirigés vers l'amont de la ligne d'échappement afin d'introduire le gaz à contre-courant des gaz d'échappement dans la ligne d'échappement et permettre une meilleure homogénéisation du mélange entre ces gaz introduits et les gaz d'échappement et d'éviter la formation de points chauds dans le catalyseur en amont du filtre à particules.

Suivant d'autres caractéristiques de l'invention :
- les moyens d'introduction se présentent sous la forme d'un tube coudé vers l'amont de la ligne d'échappement ;
- les moyens d'introduction se présentent sous la forme d'un tube présentant une ouverture latérale dirigée vers l'amont de la ligne d'échappement ; et

L'invention sera mieux comprise à la lecture de la description qui va suivre, donnée uniquement à titre d'exemple et faite en se référant aux dessins annexés, sur lesquels :
- la Fig.1 représente un schéma synoptique illustrant un système d'introduction selon l'invention ;
- les Fig. 2 et 3 représentent différentes configurations d'un tel système ;
- les Fig. 4 et 5 illustrent l'implantation de thermocouples dans un catalyseur permettant d'analyser les performances d'un système d'introduction selon l'invention ; et
- la Fig.6 représente un tableau montrant les résultats de cette analyse.

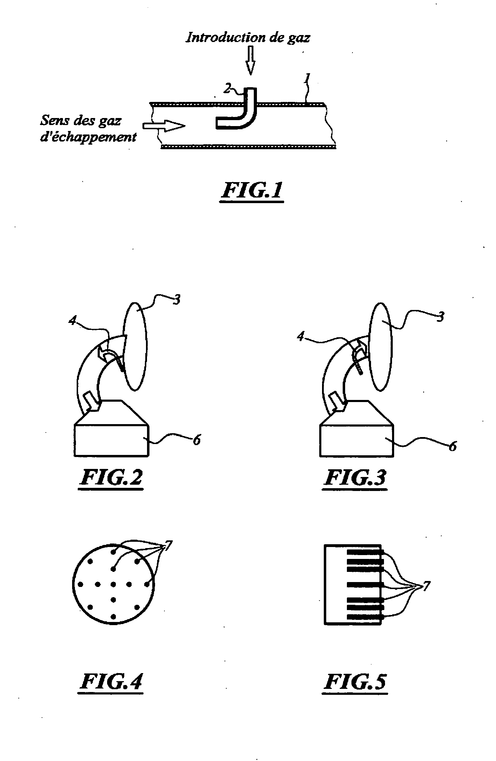

On a en effet illustré sur la figure 1, un système d'introduction de gaz dans une ligne d'échappement désignée par la référence générale 1 d'un moteur de véhicule automobile, équipée de moyens de dépollution.

Cette ligne présente n'importe quelle structure classique et ne sera donc pas décrite plus en détail par la suite.

Selon l'invention, ce système comporte des moyens d'introduction des gaz désignés par la référence générale 2, qui sont dirigés vers l'amont de la ligne d'échappement 1, afin d'introduire les gaz à contre-courant des gaz d'échappement dans la ligne d'échappement et permettre une meilleure homogénéisation entre ces gaz introduits et les gaz d'échappement circulant dans cette ligne d'échappement.

Dans l'exemple de réalisation illustré sur cette figure 1, ces moyens d'introduction des gaz se présentent sous la forme d'un tube coudé vers l'amont de la ligne d'échappement et par exemple centré par rapport à cette ligne.

Ce tube est alors raccordé à une source de gaz à introduire qui se présente par exemple sous la forme de moyens de stockage des gaz sous pression ou encore de moyens de génération par vaporisation ou sublimation de ceux-ci.

Bien entendu, d'autres modes de réalisation encore peuvent être envisagés et ces moyens d'introduction peuvent par exemple se présenter sous la forme d'un tube présentant une ouverture latérale dirigée vers l'amont de la ligne d'échappement.

Comme cela a été indiqué précédemment, cette ouverture peut être centrée ou non par rapport à la ligne d'échappement et l'angle d'introduction vers l'amont des gaz, peut par exemple être compris entre + et -20° par rapport au flux des gaz d'échappement dans cette ligne.

Un tel système peut par exemple être utilisé pour une ligne d'échappement d'un moteur à explosion essence ou Diesel.

Dans le cas d'un moteur Diesel, celui-ci est avantageusement équipé d'un turbocompresseur. Le système peut alors être utilisé pour assurer l'introduction d'hydrocarbures, de NH3, d'H2 ou d'autres gaz, tels que par exemple des gaz réducteurs et plus particulièrement l'introduction d'hydrocarbures pour la régénération d'un filtre à particules, d'un piège à NOx, ou DeNOx permanente.

A titre d'exemple, et dans le cas où le moteur Diesel est associé à un turbocompresseur, les moyens d'introduction peuvent être placés entre le turbocompresseur et le catalyseur, en sortie de ce turbocompresseur et de préférence aussi proche que possible de la sortie de celui-ci. II peut également être placé après un précatalyseur.

Les figures 2 et 3 donnent des exemples de configuration de tels systèmes, l'un de l'état de la technique sur la figure 2 et l'autre selon l'invention, sur la figure 3. Le cas visé est celui de l'injection d'HC à l'échappement d'un moteur turbocompressé à injection directe en géométrie catalyseur - filtre à particules en sortie du moteur avec une distance de mélange faible.

On reconnaît en effet sur cette figure, le turbocompresseur désigné par la référence générale 3, le tube d'introduction des gaz désigné par la référence générale 4 et la ligne d'échappement désignée par la référence générale 6.

Des essais ont été réalisés pour analyser les performances de ce système.

Des thermocouples ont été placés dans un catalyseur comme cela est illustré sur les figures 4 et 5 pour mesurer la différence de température en différents points de celui-ci.

Ces mesures ont été réalisées sur banc moteur sur un point de fort débit (190 Kg/h) et à forte température amont du catalyseur (380°C) avec un débit de gaz introduits (hydrocarbure) permettant d'engendrer 250°C d'exotherme dans le catalyseur.

Les thermocouples dont l'un est par exemple désigné par la référence générale 7 sur ces figures 4 et 5 ont été régulièrement répartis sur ce catalyseur, à partir du centre vers l'extérieur de celui-ci.

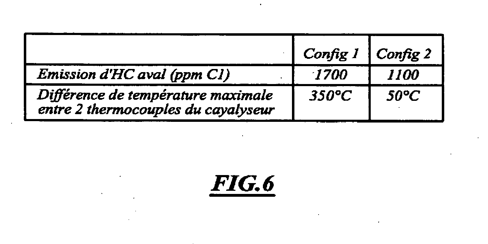

Le tableau de la figure 6 illustre les résultats obtenus et montre que grâce au système d'introduction selon l'invention, on obtient un gain en homogénéité par rapport à une injection vers l'aval de la ligne d'échappement. Les températures sont en effet plus homogènes au sein du catalyseur, ce qui correspond à un meilleur mélange des gaz introduits avec les gaz d'échappement. On observe alors un gain en efficacité de traitement de HC.

On conçoit alors que le système selon l'invention permet d'optimiser le mélange gaz introduits/gaz d'échappement et l'efficacité du catalyseur vis-à-vis des gaz introduits.

De plus, un tel système permet une diminution des sollicitations en particulier thermiques des catalyseurs lors de l'introduction des gaz, en raison de la diminution des points chauds.

De nombreuses applications, telles que par exemple de post-traitement des moteurs de Diesel équipés de filtre à particules, de moteurs équipés de turbocompresseurs, de moteurs à injection à haute pression ou non peuvent être envisagées.

## Revendications

1. Système d'introduction de gaz dans une ligne d'échappement (1) d'un moteur de véhicule automobile, équipée d'un ensemble formé par un catalyseur capable de générer un exotherme et un filtre à particules, le moteur étant associé à un turbocompresseur, **caractérisé en ce qu'**il comporte des moyens (2) d'introduction d'hydrocarbures à l'état gazeux, placés en sortie du turbocompresseur et dirigés vers l'amont de la ligne d'échappement (1) afin d'introduire le gaz à contre-courant des gaz d'échappement dans la ligne d'échappement et permettre une meilleure homogénéisation du mélange entre ces gaz introduits et les gaz d'échappement et d'éviter la formation de points chauds dans le catalyseur en amont du filtre à particules.

2. Système selon la revendication 1, **caractérisé en ce que** les moyens d'introduction (2) se présentent sous la forme d'un tube coudé vers l'amont de la ligne (1) d'échappement.

3. Système selon la revendication 1, **caractérisé en ce que** les moyens d'introduction (2) se présentent sous la forme d'un tube présentant une ouverture latérale dirigée vers l'amont de la ligne d'échappement (1).

## Claims

1. System for introducing gas in an exhaust line (1) of a motor vehicle, equipped with an assembly formed by a catalyzer capable of generating exothermy and a particle filter, the engine being associated with a turbocompressor, **characterized in that** it comprises means (2) for the introduction of hydrocarbons in gaseous state, placed at the outlet of the turbocompressor oriented upstream of the exhaust line (1) for countercurrent introduction of the exhaust gases into the exhaust line and to permit a better homogenization of the mixture between these introduced gasses and the exhaust gases and to avoid the formation of hot spots in the catalyzer upstream of the particle filter.

2. System according to Claim 1, **characterized in that** the introduction means (2) are present in the form of a bent tube oriented upstream of the exhaust line (1).

3. System according to Claim 1, **characterized in that** the introduction means (2) are present in the form of a tube having a lateral opening oriented upstream of the exhaust line (1).

## Patentansprüche

1. System zum Einführen von Gas in eine Auspuffanlage (1) eines Kraftfahrzeugmotors, das mit einer Einheit ausgerüstet ist, die aus einem Katalysator besteht, der ein Exotherm erzeugen kann, und mit einem Partikelfilter, wobei der Motor mit einem Turbolader verbunden ist, **dadurch gekennzeichnet, dass** es Mittel (2) zum Einführen von Kohlenwasserstoffen im gasförmigen Zustand aufweist, die am Ausgang des Turboladers angeordnet und nach stromaufwärts der Auspuffanlage (1) gerichtet sind, um das Gas im Gegenstrom zu den Abgasen in die Auspuffanlage einzuführen und ein besseres Homogenisieren des Gemischs dieser eingeführten Gase mit den Auspuffgasen zu erlauben und das Bilden heißer Stellen in dem Katalysator stromaufwärts des Partikelfilters zu vermeiden.

2. System nach Anspruch 1, **dadurch gekennzeichnet, dass** die Mittel zum Einführen (2) die Form eines Rohrs haben, das nach stromaufwärts der Auspuffanlage (1) abgewinkelt ist.

3. System nach Anspruch 1, **dadurch gekennzeichnet, dass** die Mittel zum Einführen (2) die Form eines Rohrs haben, das eine seitliche Öffnung aufweist, die nach stromaufwärts der Auspuffanlage (1) gerichtet ist.
